# FASCICULE DE BREVET EUROPEEN

(11) **EP 0 785 514 B1**
(45) Date de publication et mention de la délivrance du brevet: **06.12.2006**
(21) Numéro de dépôt: 97400088.7
(22) Date de dépôt: 16.01.1997
(51) Int. Cl.: G06F 12/14

(54) **Procédé de mise en oeuvre d'un programme sécurisé dans une carte à microprocesseur et carte à microprocesseur comportant un programme sécurisé**
Verfahren zur Durchführung eines gesicherten Programms in einer Mikroprozessor-Karte mit einem gesicherten Programm
Method of implementing a secure program in a microprocessor card, and microprocessor card including a secure program

(30) Priorité: 19.01.1996 FR 9600594
(43) Date de publication de la demande: 23.07.1997
(73) Titulaire: Axalto S.A., 92120 Montrouge (FR)
(72) Inventeur: Thiriet, Fabien, 45100 Orleans (FR)
(74) Mandataire: Cour, Pierre

(56) Documents cités:
- EP-A- 0 449 255
- EP-A- 0 479 655
- EP-A- 0 540 095
- FR-A- 2 595 485

## Description

La présente invention concerne un procédé de mise en oeuvre d'un programme sécurisé dans une carte à microprocesseur et une carte à microprocesseur comportant un programme sécurisé.

On sait que la plupart des microprocesseurs actuels comportent en plus de la mémoire RAM et de la mémoire ROM associées à l'unité centrale pour permettre le fonctionnement de celle-ci, une mémoire EEPROM contenant des données propres au porteur de la carte et à l'application de base à laquelle cette carte est destinée. Il est de plus en plus fréquent que les opérateurs, c'est-à-dire les sociétés qui achètent les cartes aux fabricants pour les mettre à la disposition des utilisateurs, demandent le chargement dans la mémoire EEPROM d'un programme qui leur est personnel. A titre d'exemple, dans une carte à microprocesseur destinée à la radiocommunication certains opérateurs ont demandé la mise en place d'un programme de messagerie vocale. Lorsque la liaison entre la mémoire EEPROM et l'unité centrale est laissée totalement libre, le chargement par un opérateur d'un programme écrit dans un langage directement compréhensible par l'unité centrale résulte en une prise de contrôle totale de l'unité centrale lors de l'exécution du programme sans aucune surveillance de la part du système d'exploitation du fabricant de la carte qui se trouve ainsi désactivé. Ayant le contrôle de l'unité centrale, le programme de l'opérateur peut contenir des instructions permettant un accès à toutes les informations contenues dans la carte, y compris celles qui devraient normalement être protégées à son égard.

Pour éviter une prise de contrôle de l'unité centrale par le programme de l'opérateur, on connaît des cartes à microprocesseur dans lesquelles la mémoire contenant le programme de l'opérateur doit être chargée avec des commandes particulières qui sont vérifiées par un interpréteur disposé entre la mémoire et l'unité centrale, l'interpréteur ayant pour fonction de vérifier que la commande ne porte pas atteinte à la sécurité des informations présentes dans la carte et de transformer la commande en une instruction exécutable par l'unité centrale. L'inconvénient d'un tel système est qu'il est nécessaire de rédiger le programme de l'opérateur à partir de commandes compréhensibles par l'interpréteur, ce qui limite les possibilités du programme opérateur. En outre le programme opérateur n'est pas exécuté directement mais tout d'abord soumis à une transformation par l'interpréteur de sorte que la vitesse d'exécution du programme s'en trouve affectée.

Par ailleurs, le document EP-A-0 540 095 dévoile un microcircuit pour carte à puce ayant une mémoire programmable protégée. Le document EP-A-0 449 255 dévoile un micro-contrôleur qui permet d'éviter d'altérer ou d'endommager des programmes et/ou des données.

Selon l'invention on propose un procédé de mise en oeuvre dans une carte à microprocesseur d'un programme sécurisé à l'égard d'une unité centrale reliée à une mémoire comportant des zones de mémoire, le procédé comprenant les étapes de mémoriser dans une première zone de mémoire une série de fonctions à adresse prédéterminée directement exécutables par l'unité centrale, protéger cette première zone de mémoire en écriture, et mémoriser le programme dans une seconde zone de mémoire sous forme d'une série d'instructions exécutables à l'intérieur de la seconde zone de mémoire ou activant des fonctions contenues dans la première zone de mémoire.

Ainsi pour les instructions devant être exécutées à l'extérieur de la seconde zone de mémoire, la série de fonctions à adresse prédéterminée contenues dans la première zone de mémoire constitue une barrière entre le programme et l'unité centrale, le programme étant dans l'incapacité d'activer une fonction exécutable par l'unité centrale qui ne serait pas contenue dans la première zone de mémoire.

Selon une version avantageuse de l'invention le procédé comporte l'étape de vérifier avant un lancement du programme que celui-ci ne comporte que des instructions exécutables à l'intérieur de la seconde zone de mémoire, ou activant des fonctions contenues dans la première zone de mémoire. On évite ainsi qu'un fraudeur n'introduise dans le programme opérateur une fonction directement exécutable qui porterait atteinte à la sécurité des informations présentes dans la carte.

Selon un autre aspect avantageux de l'invention, la vérification du programme est effectuée au moment de l'initialisation de la carte entre deux octets de réponse à l'initialisation. On profite ainsi de l'intervalle de temps qui sépare les deux octets de réponse pour effectuer la vérification du programme, de sorte que le processus d'initialisation ne se trouve pas allongé.

L'invention concerne également une carte à microprocesseur comportant une unité centrale reliée à une mémoire comportant des zones de mémoire, la carte comportant dans au moins une première zone de mémoire, protégée en écriture, une série de fonctions à adresse prédéterminée directement exécutables par l'unité centrale, et dans au moins une seconde zone de mémoire une série d'instructions exécutables à l'intérieur de la seconde zone de mémoire ou activant des fonctions contenues dans la première zone de mémoire.

De préférence la seconde zone de mémoire est également protégée en écriture.

D'autres caractéristiques et avantages de l'invention apparaîtront à la lecture de la description qui suit d'un mode de mise en oeuvre particulier non limitatif du procédé selon l'invention, en relation avec la figure unique ci-jointe qui est un schéma synoptique du procédé selon l'invention.

En référence à la figure, la carte à microprocesseur selon l'invention comporte d'une façon connue en soi une unité centrale 1 reliée à des mémoires RAM et ROM non représentées, et à une mémoire EEPROM 2 comportant notamment une première zone de mémoire 3 et une seconde zone de mémoire 4.

Selon l'invention, la première zone de mémoire 3 est chargée avec une série de fonctions à adresse prédéterminée directement exécutables par l'unité centrale 1 de la carte.

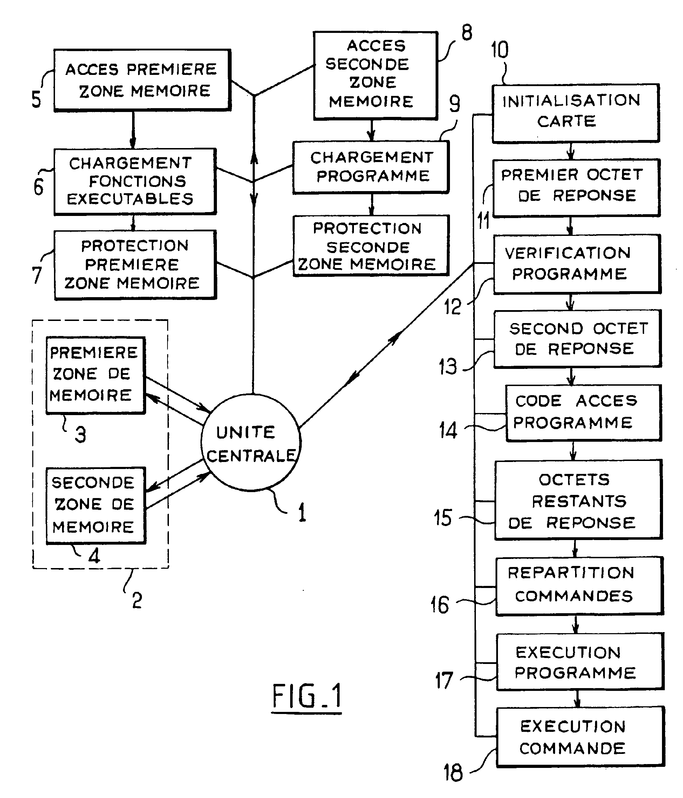

Le chargement de la première zone de mémoire est effectué par le fabricant de la carte, par exemple selon une série d'opérations illustrées sur l'organigramme de gauche de la figure 1 et comportant un accès 5 à la première zone de mémoire de la carte, un chargement 6 des fonctions exécutables et une protection 7 de la première zone de mémoire 3 en écriture. La protection de la première zone de mémoire 3 peut être obtenue soit par un code d'accès associé à un algorithme d'authentification, le code d'accès étant connu seulement du fabricant, soit par une interdiction totale d'écriture de la première zone de mémoire 3 après le chargement de celle-ci.

On entend par fonction à adresse prédéterminée au sens de l'invention une fonction exécutable à une adresse explicitement indiquée dans la fonction ou à une adresse pouvant être calculée par l'unité centrale à partir d'une définition donnée dans la fonction de sorte qu'en raison de la protection en écriture de la zone de mémoire contenant les fonctions, la définition des adresses où ces fonctions sont exécutées ne peut pas être modifiée par le programme opérateur. Cette disposition permet donc de contrôler de façon précise toutes les adresses accessibles au programme opérateur.

Selon l'invention la seconde zone de mémoire est chargée avec le programme opérateur sous forme d'une série d'instructions exécutables à l'intérieur de la seconde zone de mémoire ou activant des fonctions contenues dans la première zone de mémoire. Les instructions exécutables peuvent être toutes les fonctions directement exécutables par l'unité centrale mais dont les paramètres sont fixés de façon à déterminer si elles sont exécutables dans la seconde zone de mémoire, c'est-à-dire si elles pointent sur des adresses comprises dans la seconde zone de mémoire, ou en dehors de celle-ci. A ce propos on notera qu'une fonction contenue dans la première zone de mémoire, par exemple une fonction de lecture ou d'écriture, sera exécutable en dehors de cette zone mais à des adresses contrôlées comme indiqué ci-dessus.

Le programme opérateur peut être chargé soit par le fabricant de la carte à la demande de l'opérateur, soit par celui-ci selon un organigramme qui est illustré sur le milieu de la figure 1 et qui comporte un accès 8 à la seconde zone de mémoire suivi d'un chargement 9 du programme dans la seconde zone de mémoire.

De préférence, le chargement du programme est suivi d'une opération de protection en écriture de la seconde zone de mémoire vis-à-vis d'un utilisateur extérieur.

Toutes les opérations de chargement sont effectuées sous le contrôle de l'unité centrale et il est donc possible de prévoir au cours du chargement une vérification que les instructions saisies dans la seconde zone de mémoire sont toutes exécutables à l'intérieur de la seconde zone de mémoire ou activent des fonctions contenues dans la première zone de mémoire. Afin de pallier toute fraude sur le contenu de la seconde zone de mémoire après le chargement normal de celle-ci, on prévoit de préférence préalablement au chargement du programme une interdiction d'exécution de celui-ci et une procédure de lancement du programme selon un organigramme qui est illustré par la partie droite de la figure 1. Cet organigramme comporte une initialisation 10 de la carte, l'envoi 11 d'un premier octet de réponse à l'initialisation de la carte, une étape de vérification 12 du programme contenu dans la seconde zone de mémoire pour s'assurer que toutes les instructions sont exécutables à l'intérieur de la seconde zone de mémoire ou activent des fonctions dans la première zone de mémoire, l'envoi 13 d'un second octet de réponse, le cas échéant la saisie d'un code d'accès 14 au programme pour le lancement de celui-ci, l'envoi 15 des octets restants de la réponse à l'initialisation, la répartition 16 des commandes, l'exécution 17 du programme et l'exécution 18 de la commande reçue.

La vérification qu'une fonction appelée par le programme est bien contenue dans la première zone de mémoire peut être réalisée en consultant une table donnant toutes les adresses de lancement des fonctions contenues dans la première zone de mémoire.

La vérification du programme doit bien entendu résulter en une signalisation afin que le programme ne puisse pas être lancé dans le cas d'une instruction erronée dans le programme. Cette signalisation est par exemple effectuée par le positionnement d'un drapeau dans la seconde zone de mémoire lorsque la vérification est satisfaisante et la remise à zéro du drapeau dans le cas contraire. Dans le cas où il est nécessaire de saisir un code pour l'exécution du programme opérateur, on peut également prévoir un drapeau associé à la saisie de ce code. On remarquera que la première et la seconde zone de mémoire contiennent des instructions directement exécutables de sorte qu'après vérification du programme celui-ci sera exécuté sans aucune contrainte contrairement aux systèmes antérieurs qui doivent inclure une interprétation de chaque commande préalablement à son exécution.

Bien entendu l'invention n'est pas limitée au mode de mise en oeuvre illustré et est susceptible de variations qui apparaîtront à l'homme de métier sans sortir du cadre de l'invention tel que défini par les revendications.

En particulier, bien que l'invention ait été décrite en relation avec une mémoire EEPROM 2 contenant une seule première zone de mémoire 3 et une seule seconde zone de mémoire 4, on peut sans sortir du cadre de l'invention prévoir plusieurs programmes différents chargés dans des secondes zones de mémoires différentes associées à une même première zone de mémoire ou au contraire chacune associée à une première zone de mémoire contenant les fonctions exécutables correspondantes.

Bien que l'invention ait été illustrée avec une première zone de mémoire dans le EEPROM 2, ce qui permet un chargement des fonctions exécutables après l'encartage du microprocesseur, on peut également prévoir de charger les fonctions exécutables de la première zone de mémoire dans la RAM ou la ROM associée à l'unité centrale, les fonctions étant alors intégrées au masque servant à réaliser le microprocesseur.

## Revendications

1. Procédé de mise en oeuvre dans une carte à microprocesseur d'un programme sécurisé à l'égard d'une unité centrale (1) reliée à une mémoire (2) comportant des zones de mémoire, comprenant les étapes de :
- mémoriser dans une première zone de mémoire (3) une série de fonctions directement exécutables par une unité centrale (1),
- protéger cette première zone de mémoire (3) en écriture,
- mémoriser le programme dans une seconde zone de mémoire (4) sous forme d'une série d'instructions exécutables par l'unité centrale ou activant des fonctions contenues dans la première zone de mémoire (3), **caractérisé en ce que** les fonctions de la première zone de mémoire sont exécutables à des adresses prédéterminées, et **en ce qu'**en dehors de l'activation des fonctions de la première zone de mémoire, les instructions de la seconde zone de mémoire sont exécutables exclusivement dans la seconde zone de mémoire.

2. Procédé selon la revendication 1, **caractérisé en ce qu'**il comporte l'étape de vérifier avant lancement du programme que celui-ci ne comporte que des instructions exécutables exclusivement à l'intérieur de la seconde zone de mémoire (4) ou activant des fonctions contenues dans la première zone de mémoire (3).

3. Procédé selon la revendication 2, **caractérisé en ce que** la vérification du programme est effectuée au moment de l'initialisation de la carte entre deux séries d'octets de réponse à l'initialisation.

4. Carte microprocesseur comportant une unité centrale (1) reliée à une mémoire (2) comportant dans au moins une première zone de mémoire (3), protégée en écriture, des fonctions directement exécutables par l'unité centrale (1), et dans au moins une seconde zone de mémoire (4), une série d'instructions exécutables par l'unité centrale ou activant des fonctions contenues dans la première zone de mémoire, **caractérisée en ce que** les fonctions de la première zone de mémoire sont exécutables à des adresses prédéterminées, et **en ce qu'**en dehors de l'activation des fonctions de la première zone de mémoire, les instructions de la seconde zone de mémoire sont exécutables exclusivement dans la seconde zone de mémoire.

5. Carte à microprocesseur selon la revendication 4, **caractérisée en ce que** la seconde zone de mémoire est au moins partiellement protégée en écriture.

## Claims

1. A method of implementing in a microprocessor card a secure program with respect to a CPU (1) connected to a memory (2) including memory zones, the method comprising the steps of:
- storing in a first memory zone (3) a series of functions that are directly executable by a CPU (1);
- write-protecting said first memory zone (3); and
- storing the program in a second memory zone (4), in the form of a series of instructions executable by the CPU or activating functions contained in the first memory zone (3) **characterized in that** the functions of the first memory zone are executable as predetermined-address functions, and **in that**, apart from activating functions in the first memory zone, instructions in the second memory zone are executable solely within the second memory zone.

2. A method according to claim 1, **characterized in that** it comprises, prior to launching the program, a step of verifying that the program includes only instructions that are executable within the second memory zone (4) or that activate functions contained in the first memory zone (3).

3. A method according to claim 2, **characterized** the program verification is performed on initialization of the card in the time between two series of initialization response bytes.

4. A microprocessor card including a CPU (1) connected to a memory (2) including, in at least one first memory zone (3) that is write-protected, functions that are directly executable by the CPU (1), and in at least one second memory zone (4), a series of instructions that are executable by the CPU or that activate functions contained in the first memory zone, **characterized in that** the functions of the first memory zone are executable as predetermined-address functions, and **in that**, apart from activating functions in the first memory zone, instructions in the second memory zone are executable solely within the second memory zone.

5. A microprocessor card according to claim 4, **characterized in that** the second memory zone is write-protected, at least in part.

## Patentansprüche

1. Umsetzungsverfahren eines gegenüber einer mit einem Speicherbereiche umfassenden Speicher (2) verbundenen Zentraleinheit (1) gesicherten Programms in einer Karte mit Mikroprozessor mit den folgenden Stufen:
- Speichern einer Serie von durch eine Zentraleinheit (1) direkt ausführbaren Funktionen in einem ersten Speicherbereich (3),
- Schützen dieses ersten Speicherbereichs (3) durch einen Schreibschutz,
- Speichern des Programms in einem zweiten Speicherbereich (4) in Form einer Serie von durch die Zentraleinheit ausführbaren oder die im ersten Speicherbereich (3) enthaltenen Funktionen aktivierenden Anweisungen, **dadurch gekennzeichnet, dass** die Funktionen des ersten Speicherbereichs an vorbestimmten Adressen ausführbar sind, und dass die Anweisungen des zweiten Speicherbereichs außerhalb der Aktivierung der Funktionen des ersten Speicherbereichs ausschließlich im zweiten Speicherbereich ausführbar sind.

2. Verfahren gemäß Anspruch 1, **dadurch gekennzeichnet, dass** es die Überprüfungsstufe vor dem Starten des Programms umfasst, dass dieses nicht die ausschließlich im Innern des zweiten Speicherbereichs (4) ausführbaren oder die im ersten Speicherbereich (3) enthaltenen Funktionen aktivierenden Anweisungen enthält.

3. Verfahren gemäß Anspruch 2, **dadurch gekennzeichnet, dass** die Überprüfung des Programms zum Zeitpunkt der Initialisierung der Karte zwischen zwei Antwort-Byte-Serien bei der Initialisierung ausgeführt wird.

4. Mikroprozessorkarte mit einer mit einem Speicher (2) verbundenen Zentraleinheit (1) mit durch die Zentraleinheit (1) direkt ausführbaren Funktionen in wenigstens einem ersten schreibgeschützten Speicherbereich (3) und in wenigstens einem zweiten Speicherbereich (4) eine Serie von durch die Zentraleinheit ausführbare oder im ersten Speicherbereich enthaltene Anweisungen, **dadurch gekennzeichnet, dass** die Funktionen des ersten Speicherbereichs an vorbestimmten Adressen ausführbar sind und dass außerhalb der Aktivierung der Funktionen des ersten Speicherbereichs die Anweisungen des zweiten Speicherbereichs ausschließlich im zweiten Speicherbereich ausführbar sind.

5. Karte mit Mikroprozessor gemäß Anspruch 4, **dadurch gekennzeichnet, dass** der zweite Speicherbereich wenigstens teilweise schreibgeschützt ist.
